# EUROPEAN PATENT APPLICATION

(11) **EP 2 429 188 A2**
(43) Date of publication of application: **14.03.2012**
(21) Application number: 11176176.3
(22) Date of filing: 01.08.2011
(51) Int. Cl.: H04N 7/15, G06Q 10/00

(54) **Information processing device, information processing method, computer program, and content display system**

(30) Priority: 10.08.2010 JP 2010179697
(71) Applicant: Sony Corporation, Tokyo 108-0075 (JP)
(72) Inventor: Utsuki, Shingo, Minato-ku, Tokyo (JP); Dickinson Forrest, Jr., Matthew, Minato-ku, Tokyo (JP)
(74) Representative: Ealey, Douglas Ralph

(57) **Abstract**

A method is provided for initiating display of information relating to content having a plurality of portions. The method comprises acquiring a capability of a first user device in a first location and a capability of a second user device in a second location. The method further comprises respectively acquiring, from the first and second user devices, information identifying first and second ones of the content portions. The method still further comprises generating signals for respectively displaying representations of the first and second user devices as indications of the first and second content portions.

## Description

The present disclosure relates to an information processing device, an information processing method, a computer program, and a content display system.

Mechanisms (content display systems) that allow a plurality of users in physically distant locations to view the same content over a network include a videoconference system, for example (cf. e.g. Japanese Unexamined Patent Publication No. 2008-289094). In this system, a plurality of users in physically distant locations can have a conversation, looking at the same screen.

Basically, in such an existing content display system, content is displayed on a screen, and users can communicate with one another by voice or the like while looking at the screen. For example, when a certain user displays a document file on the screen, other users can view the document file, and the users can communicate with one another about the details of the document file.

However, a mechanism that, when a plurality of users in physically distant locations view the same content (document, video, Web site on the Internet etc.) over a network, supports viewing of the content by allowing the plurality of users to directly modify the content at the same time has not been developed. In the existing content display system, only a specific user can modify the content displayed on the screen, and it has been difficult for a plurality of users to modify the content on the screen at the same time and communicate with one another.

In light of the foregoing, it is desirable to provide a novel and improved information processing device, information processing method, computer program, and content display system that can provide a mechanism that supports viewing of content when a plurality of users in physically distant locations view the same content (document, video, Web site on the Internet etc.) over a network.

Various respective aspects and features of the invention are defined in the appended claims. Combinations of features from the dependent claims may be combined with features of the independent claims as appropriate and not merely as explicitly set out in the claims.

Accordingly, there is provided a method for initiating display of information relating to content having a plurality of portions. The method comprises acquiring a capability of a first user device in a first location and a capability of a second user device in a second location. The method further comprises respectively acquiring, from the first and second user devices, information identifying first and second ones of the content portions. The method still further comprises generating signals for respectively displaying representations of the first and second user devices as indications of the first and second content portions.

In a second aspect, there is provided a method for displaying information relating to content having a plurality of portions. The method comprises sending to a server, from a first user device in a first location, information identifying a first portion of the content, the first user device having a first capability. The method further comprises receiving, from the server, signals for displaying: a representation of the first user device as an indication of the first content portion; and a representation of a second user device in a second location as an indication of a second content portion associated with the second user device, the second user device having a second capability. The method still further comprises displaying the representations of the first and second user devices.

In a third aspect, there is provided an apparatus for displaying information relating to content having a plurality of portions, comprising a memory and a processor executing instructions stored in the memory. The processor executes instructions to send to a server, from a first user device in a first location, information identifying a first portion of the content, the first user device having a first capability. The processor further executes instructions to receive, from the server, signals for displaying: a representation of the first user device as an indication of the first content portion; and a representation of a second user device in a second location as an indication of a second content portion associated with the second user device, the second user device having a second capability. The processor still further executes instructions to display the representations of the first and second user devices.

According to the embodiments of the present disclosure described above, it is possible to provide an information processing device, an information processing method, a computer program, and a content display system that can provide a mechanism that supports viewing of content when a plurality of users in physically distant locations view the same content (document, video, Web site on the Internet etc.) over a network.

Embodiments of the invention will now be described with reference to the accompanying drawings, throughout which like parts are referred to by like references, and in which:
FIG. 1 is an explanatory view showing an exemplary configuration of a content display system 1 according to one embodiment of the disclosure;
FIG. 2 is an explanatory view showing a configuration of an information processing device 100 according to one embodiment of the disclosure;
FIG. 3 is an explanatory view showing a functional configuration of a control unit 101 included in the information processing device 100 according to one embodiment of the disclosure;
FIG. 4 is a flowchart showing an operation of the information processing device 100 according to one embodiment of the disclosure;
FIG. 5 is an explanatory view showing a display example of user information displayed on an image output unit 106;
FIG. 6 is an explanatory view showing a display example of user information displayed on the image output unit 106;
FIG. 7A is an explanatory view showing a display example of a screen on the image output unit 106 when logging into the content display system and sharing content with other users;
FIG. 7B is an explanatory view showing a display example of a screen on the image output unit 106 when logging into the content display system and sharing content with other users;
FIG. 7C is an explanatory view showing a display example of a screen on the image output unit 106 when logging into the content display system and sharing content with other users;
FIG. 8 is an explanatory view showing a display example of user information displayed on the image output unit 106;
FIG. 9 is an explanatory view showing a display example of user information displayed on the image output unit 106;
FIG. 10 is an explanatory view showing a display example of user information displayed on the image output unit 106;
FIG. 11 is an explanatory view showing a display example of user information displayed on the image output unit 106;
FIG. 12 is an explanatory view showing a display example when displaying information indicating that text is being input as user information;
FIG. 13 is an explanatory view showing a display example when displaying information indicating that text is being input as user information;
FIG. 14A is an explanatory view showing a control example of display of user information according to the volume level of voice input by a user;
FIG. 14B is an explanatory view showing a control example of display of user information according to the volume level of voice input by a user;
FIG. 15 is an explanatory view showing a state where user information of a user in the idle state is temporarily moved to a lower part of a screen;
FIG. 16 is an explanatory view showing an example of a screen displayed when no operation is performed for a given length of time after user information of a user in the idle state is temporarily moved to a lower part of a screen.
FIG. 17 is an explanatory view showing an example of a screen displayed on the image output unit 106;
FIG. 18 is an explanatory view showing an example of a screen displayed on the image output unit 106;
FIG. 19 is an explanatory view showing an example of a screen displayed on the image output unit 106;
FIG. 20 is an explanatory view showing an example of a screen displayed on the image output unit 106;
FIG. 21 is an explanatory view showing an example of a screen displayed on the image output unit 106;
FIG. 22 is an explanatory view showing an example of a screen displayed on the image output unit 106;
FIG. 23 is an explanatory view showing an example of a screen displayed on the image output unit 106;
FIG. 24 is an explanatory view showing an example of a screen displayed on the image output unit 106; and
FIG. 25 is an explanatory view showing an exemplary hardware configuration of the information processing device 100 according to one embodiment of the disclosure.

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Preferred embodiments of the disclosure will be described hereinafter in the following order.

### <1. One Embodiment of Disclosure>

### [1-1. Configuration of Content Display System]

### [1-2. Configuration of Information Processing Device]

### [1-3. Operation of Information Processing Device]

### [1-4. Exemplary Hardware Configuration of Information Processing Device]

### <2. Summary>

### <1. One Embodiment of Disclosure>

### [1-1. Configuration of Content Display System]

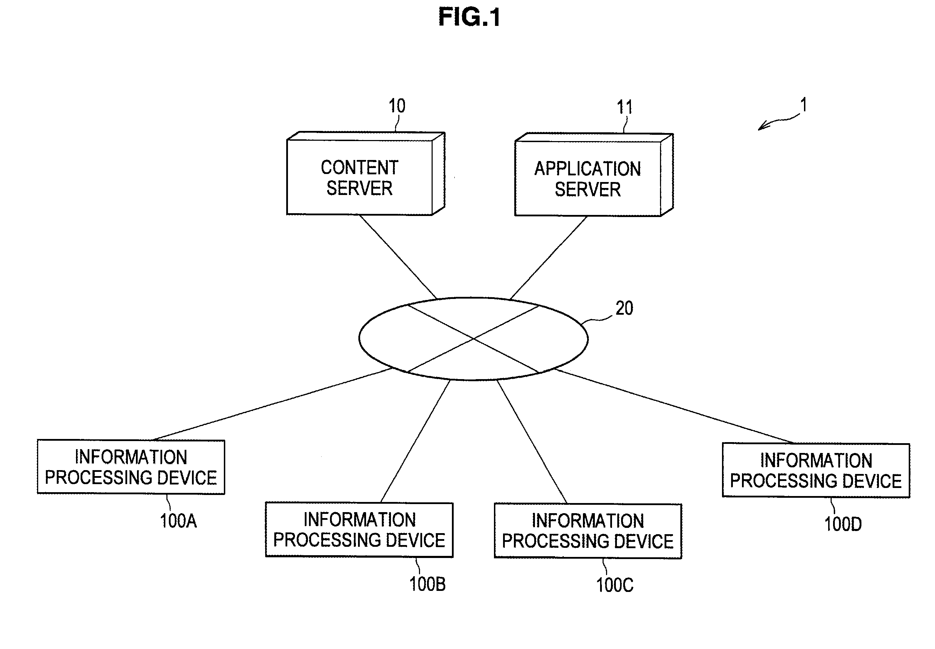

A configuration of a content display system according to one embodiment of the disclosure is described first. FIG. 1 is an explanatory view showing an exemplary configuration of a content display system 1 according to one embodiment of the disclosure. Hereinafter, a configuration of a content display system according to one embodiment of the disclosure is described with reference to FIG. 1.

Referring to FIG. 1, the content display system 1 according to one embodiment of the disclosure includes a content server 10, an application server 11, and information processing devices 100A to 100D. The content server 10, the application server 11, and the information processing devices 100A to 100D are connected through a network 20 and exchange data with one another.

The content server 10 stores content having a plurality of portions to be displayed by the information processing devices 100A to 100D and acquires capabilities of the information processing devices 100A to 100D, such as audio output or video output. The content server 10 provides appropriate content to the information processing devices 100A to 100D in response to a request from the information processing devices 100A to 100D. The information processing devices 100A to 100D, which are associated with different users in different locations, receive the content provided from the content server 10 and display the content on a screen. The content provided from the content server 10 includes document files, presentation files, video files, and Web pages on the Internet, for example, although the content is not limited to those listed above in this disclosure.

In this embodiment, the content server 10 can provide different content to the information processing devices 100A to 100D and can further provide the same content to the information processing devices 100A to 100D. Then, the information processing devices 100A to 100D allow users to simultaneously view the same content provided from the content server 10 and modify the content.

Specifically, users of the information processing devices 100A to 100D can share the same content provided from the content server 10 and simultaneously view the same content.

The application server 11 stores an application for sharing the same content provided from the content server 10 to the information processing devices 100A to 100D among the information processing devices 100A to 100D.

Note that, although the application server 11 is separated from the content server 10 in this embodiment, the disclosure is not limited to such an example, and the function of the application server 11 may be incorporated into the content server 10.

The information processing devices 100A to 100D may be a desktop personal computer, a notebook type personal computer, a mobile phone, a television set, a stationary game machine, a portable game machine or the like, for example, and they are connected to the content server 10 through the network. Further, the information processing devices 100A to 100D are connected to one another through the network 20. Note that, in the following description of the information processing devices 100A to 100D, they are sometimes referred to simply as the information processing device 100.

The information processing devices 100A to 100D can acquire the content from the content server 10 through the network 20 by transmitting a content acquisition request to the content server 10. Then, under control of the application stored in the application server 11, the information processing devices 100A to 100D can operate to enable simultaneous viewing of the same content, user information, and modifications provided from the content server 10.

The configuration of the content display system according to one embodiment of the disclosure is described above with reference to FIG. 1. Next, a configuration of the information processing device 100 according to one embodiment of the disclosure is described hereinbelow.

### [1-2. Configuration of Information Processing Device]

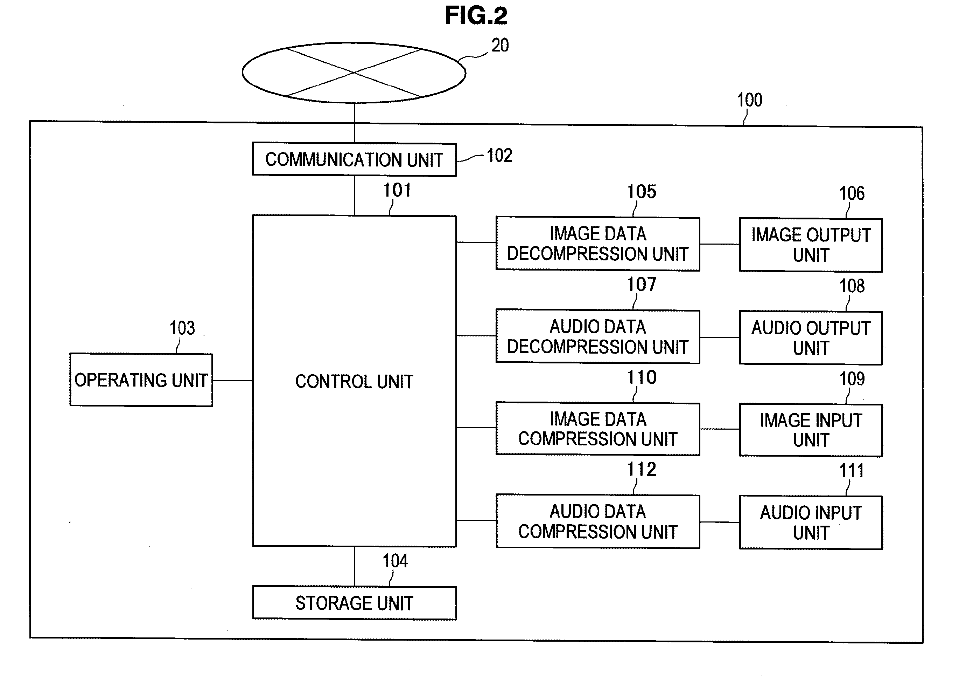

FIG. 2 is an explanatory view showing a configuration of the information processing device 100 according to one embodiment of the disclosure. Hereinafter, the configuration of the information processing device 100 according to one embodiment of the disclosure is described with reference to FIG. 2.

Referring to FIG. 2, the information processing device 100 according to one embodiment of the disclosure includes a control unit 101, a communication unit 102, an operating unit 103, a storage unit 104, an image data decompression unit 105, an image output unit 106, an audio data decompression unit 107, an audio output unit 108, an image input unit 109, an image data compression unit 110, an audio input unit 111, and an audio data compression unit 112.

The control unit 101 controls the information processing device 100 as a whole by controlling the respective functional units illustrated in FIG. 2. An arithmetic and control unit such as a CPU, for example, may be used as the control unit 101, and the unit uses a RAM as a work area, and performs an arithmetical operation and control according to computer programs stored in the nonvolatile storage unit 104. A ROM, a flash memory or the like may be used as the storage unit 104.

The communication unit 102 is a communication interface that receives content such as video data through the network 20 according to a given communication standard.

The operating unit 103 accepts an operation input to the information processing device 100, and it may be an input device such as a keyboard or a mouse, for example. When an operation is performed on the operating unit 103 by a user of the information processing device 100, the control unit 101 detects the meaning of the operation on the operating unit 103 and performs processing in accordance with the operation.

The storage unit 104 has nonvolatility as described above and stores computer programs to be executed by the control unit 101. Specifically, the storage unit 104 stores a program for viewing the content provided from the content server 10, a program for performing decompression of video data or audio data in the image data decompression unit 105 or the audio data decompression unit 107, a program for performing compression of video data or audio data in the image data compression unit 110 or the audio data compression unit 112 and so on.

The image data decompression unit 105 is a module (decoder) that decompresses (decodes) video data that is included in the content supplied from the control unit 101 in accordance with a given standard and supplies the data to the image output unit 106. The image data decompression unit 105 is implemented by hardware or software.

The image output unit 106 has a frame memory function that temporarily stores the video data decompressed by the image data decompression unit 105, a display controller function that outputs frame data stored in the frame memory, and an image display function that displays an image by the display controller.

The audio data decompression unit 107 is a module (decoder) that decompresses (decodes) audio data that is included in the content supplied from the control unit 101 in accordance with a given standard and supplies the data to the audio output unit 108. The audio data decompression unit 107 is implemented by hardware or software.

The audio output unit 108 has a sound driver function that performs processing such as conversion and amplification of the digital audio data decompressed by the audio data decompression unit 107 into analog audio data and then outputs the data, and a speaker function that outputs the audio data from the sound driver.

The image input unit 109 processes an image signal that is input from an imaging device such as a camera, for example, and outputs the signal to the image data compression unit 110.

The image data compression unit 110 is a module (encoder) that compresses (encodes) the image signal supplied from the image input unit 109 in accordance with a given standard and outputs the signal to the control unit 101.

The audio input unit 111 has a sound driver function that converts an analog audio signal captured by a sound capturing device such as a microphone into a digital audio signal and then outputs the signal to the audio data compression unit 112.

The audio data compression unit 112 is a module (encoder) that compresses (encodes) the digital audio signal supplied from the audio input unit 111 in accordance with a given standard and outputs the signal to the control unit 101.

With such a configuration, the information processing device 100 can display the content provided from the content server 10 on the image output unit 106. Further, the information processing device 100 allows its user to perform communication by text input or voice input with another user who is simultaneously viewing the same content provided from the content server 10.

The configuration of the information processing device 100 according to one embodiment of the disclosure is described above with reference to FIG. 2. A functional configuration of the control unit 101 that is included in the information processing device 100 according to one embodiment of the disclosure is described hereinbelow.

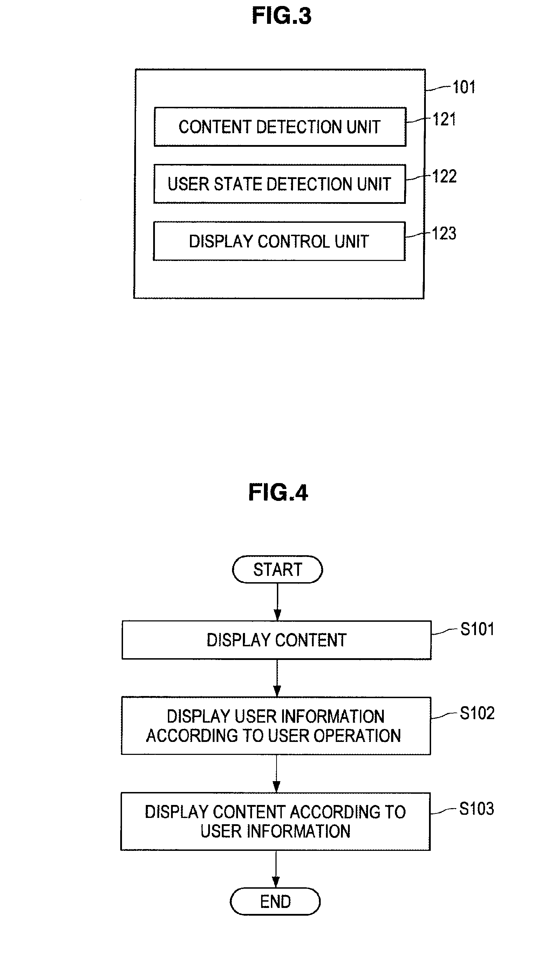

FIG. 3 is an explanatory view showing a functional configuration of the control unit 101 that is included in the information processing device 100 according to one embodiment of the disclosure. Hereinafter, the functional configuration of the control unit 101 included in the information processing device 100 according to one embodiment of the disclosure is described with reference to FIG. 3.

Referring to FIG. 3, the control unit 101 included in the information processing device 100 according to one embodiment of the disclosure includes a content detection unit 121, a user state detection unit 122, and a display control unit 123.

The content detection unit 121 detects details of the content that is displayed on the image output unit 106 in the information processing device 100. According to the details of the content detected by the content detection unit 121, the display control unit 123, which is described later, controls information to be displayed on the image output unit 106.

The user state detection unit 122 is connected to the network 20 and detects a state (user state) of another information processing device 100 that is displaying the same content. According to the state (user state) of another information processing device 100 detected by the user state detection unit 122, the display control unit 123, which is described later, controls information to be displayed on the image output unit 106.

The display control unit 123 performs control of information to be displayed on the image output unit 106 according to the user operation on the operating unit 103, the details of the content detected by the content detection unit 121, and the state (user state) of another information processing device 100 detected by the user state detection unit 122. The display control of information on the image output unit 106 by the display control unit 123 is described in detail later in reference to specific examples.

It should be noted that, although the configuration in which the content detection unit 121, the user state detection unit 122 and the display control unit 123 are included in the control unit 101 of the information processing device 100 is illustrated in this embodiment, the disclosure is not limited thereto. Some or all of those elements may be included in a device different from the information processing device 100, such as the application server 11, for example.

The functional configuration of the control unit 101 included in the information processing device 100 according to one embodiment of the disclosure is described above. Hereinafter, an operation of the information processing device 100 according to one embodiment of the disclosure is described.

### [1-3. Operation of Information Processing Device]

FIG. 4 is a flowchart showing an operation of the information processing device 100 according to one embodiment of the disclosure. The flowchart shown in FIG. 4 represents the operation of the information processing device 100 when displaying the content from the content server 10 on the image output unit 106 of the information processing device 100. Hereinafter, the operation of the information processing device 100 according to one embodiment of the disclosure is described with reference to FIG. 4.

The information processing device 100 makes a connection to the content server 10 through the network 20 based on user operation and acquires content having a plurality of portions from the content server 10. Then, the information processing device 100 displays the content acquired from the content server 10 on the image output unit 106 (step S101). The display control of the content on the image output unit 106 is mainly performed by the control unit 101. Particularly, the display control of the content on the image output unit 106 is performed by the display control unit 123 shown in FIG. 3.

The content that is acquired from the content server 10 through the network 20 by the information processing device 100 may be a homepage on the Internet, for example. In addition to the homepage on the Internet, the content acquired from the content server 10 through the network 20 may be a still image, a moving image, a document file, a presentation file or the like.

After the information processing device 100 acquires the content from the content server 10 through the network 20 and displays the content on the image output unit 106, the information processing device 100 then displays user information, which is information specific to the users, in superposition upon the content, on the image output unit 106 according to user operation on the operating unit 103 (step S102). The display control of the user information on the image output unit 106 is mainly performed by the control unit 101, and particularly performed by the display control unit 123 shown in FIG. 3.

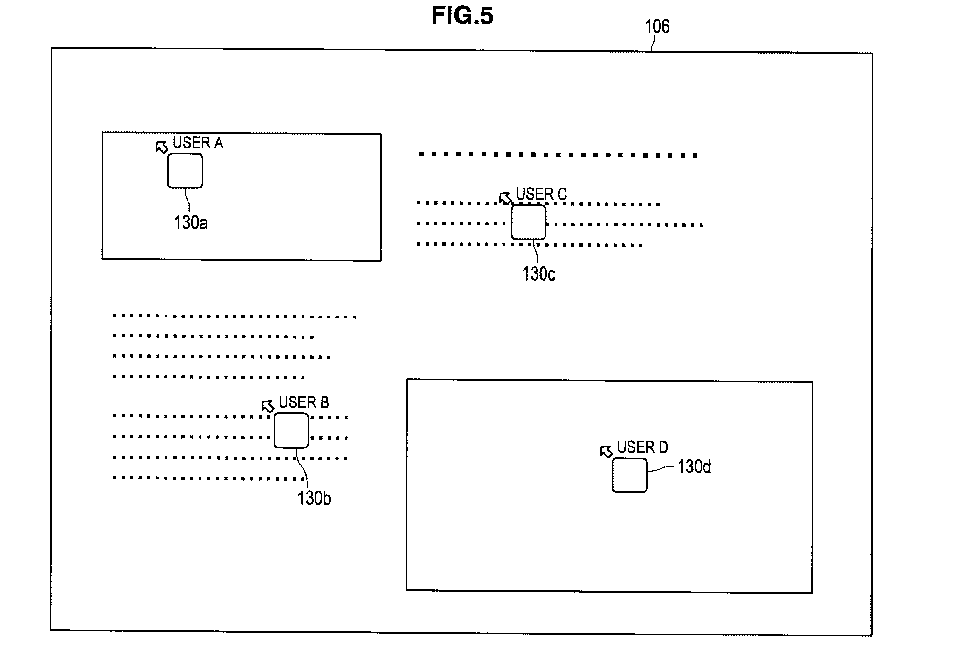

FIG. 5 is an explanatory view showing a display example of the user information that is displayed on the image output unit 106 by the display control unit 123. FIG. 5 shows the state where the information processing device 100 is displaying the same content as the content displayed in the other information processing devices 100 on the image output unit 106 by use of the display control unit 123. Note that, although a Web site on the Internet is illustrated as an example of the content in FIG. 5, the content that is shared among a plurality of users is not limited to such an example as a matter of course.

FIG. 5 shows user information 130a to 130d, each of which comprises a cursor operated by a user of each information processing device 100 and a user name and an icon of each user displayed near the cursor. The user information 130a represents the information processing device 100A, the user information 130b represents the information processing device 100B, the user information 130c represents the information processing device 100C, and the user information 130d represents the information processing device 100D. The content server 10 acquires the user information 130a-130d and causes the display control units 123 of the information processing devices 100 to display the user information 130a-130d on the image output unit 106.

Note that the icon may be prepared by a user; alternatively, when the information processing device 100 is equipped with an imaging device, an image of a user captured by the imaging device may be displayed in real time. The icon prepared by a user may be a head shot of the user, or an image (avatar) of the user in a social networking service (SNS), for example. The icon is not limited to such examples, and a user can display an arbitrary image as the icon.

A user of each information processing device 100 can arbitrarily move the user information 130a to 130d to different content portions by operating the operating unit 103. Further, a user of the information processing device 100 can view the user information indicating a content portion selected by a user of another information processing device 100 through the image output unit 106 and thereby find in what state other users are and what kind of modifications other users are performing on the content displayed on the image output unit 106 in real time. The content server 10 acquires information identifying the content portions selected by the users and causes the display control units 123 of the information processing devices 100 to display the user information 130a to 130d within the appropriate content portions on the image output unit 106.

Further, a user of each information processing device 100 can communicate with other users by text input or voice input. The text that is input by a user is displayed superposed on the content and displayed also in the information processing devices 100 that share the same content and are operated by other users. Content server 10 acquires a character string that is input by a user and causes the display control unit 123 of the information processing devices 100 to display the character string within the content portion selected by the user on the image output unit 106, similar to the user information 130a to 130d. Further, the voice input by a user is output also from the information processing devices 100 that share the same content and are operated by other users.

It should be noted that the content that is displayed on the image output unit 106 of the information processing devices 100 in the content display system 1 according to one embodiment of the disclosure may be displayed all over the screen of the image output unit 106 or displayed on a part of the screen of the image output unit 106. In the case of displaying the content on a part of the screen of the image output unit 106, the content may be displayed inside a window, which is a function provided by the operating system (OS).

In the above manner, the information processing device 100 displays the user information, which is information specific to each user, superposed upon the content on the image output unit 106 by use of the display control unit 123 according to user operation on the operating unit 103. Then, the information processing device 100 performs display of the content on the image output unit 106 according to user operation on the operating unit 103 (step S103). The display control of the content on the image output unit 106 according to user operation is mainly performed by the control unit 101, and particularly performed by the display control unit 123 shown in FIG. 3.

By displaying the user information on the image output unit 106 as shown in FIG. 5, the content display system 1 according to one embodiment of the disclosure enables communication among users of the information processing devices 100. Users of the information processing devices 100 may communicate with one another by inputting text using the operating unit 103 or making conversation using the image input unit 109 or the audio input unit 111.

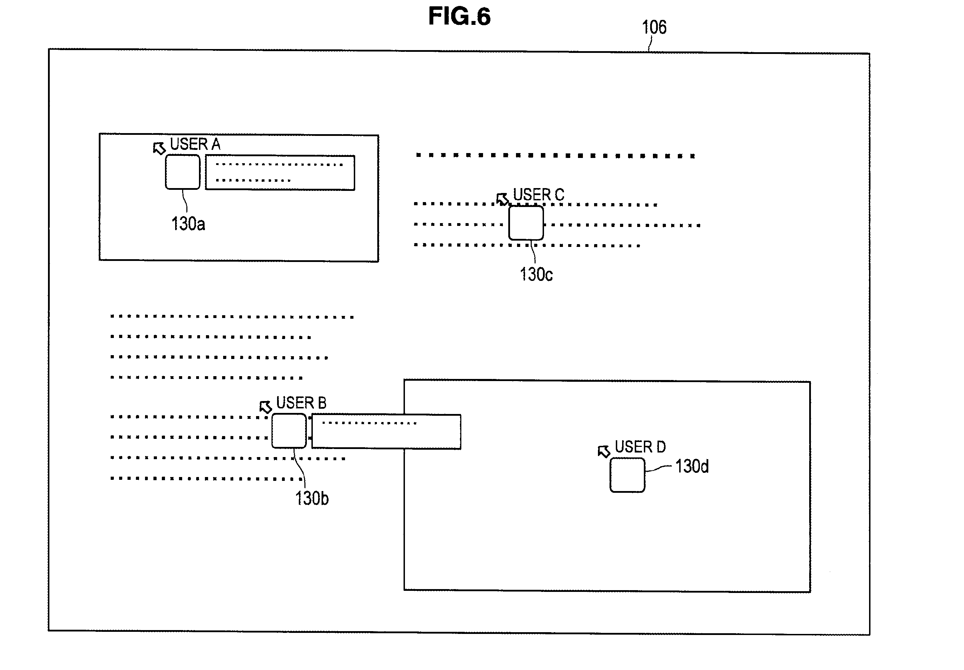

FIG. 6 is an explanatory view showing a display example of the content and the user information on the image output unit 106 in the case where users of the information processing devices 100 communicate with one another by inputting text using the operating unit 103. FIG. 6 illustrates the state where text is displayed in conjunction with the user information 130a and 130b. Thus, the example of FIG. 6 shows the state where a user of the information processing device 100A and a user of the information processing device 100B are inputting text using the operating unit 103.

In this manner, when a user of the information processing device 100A and a user of the information processing device 100B input text using the operating unit 103, the text is displayed as the user information, thereby enabling communication among different users.

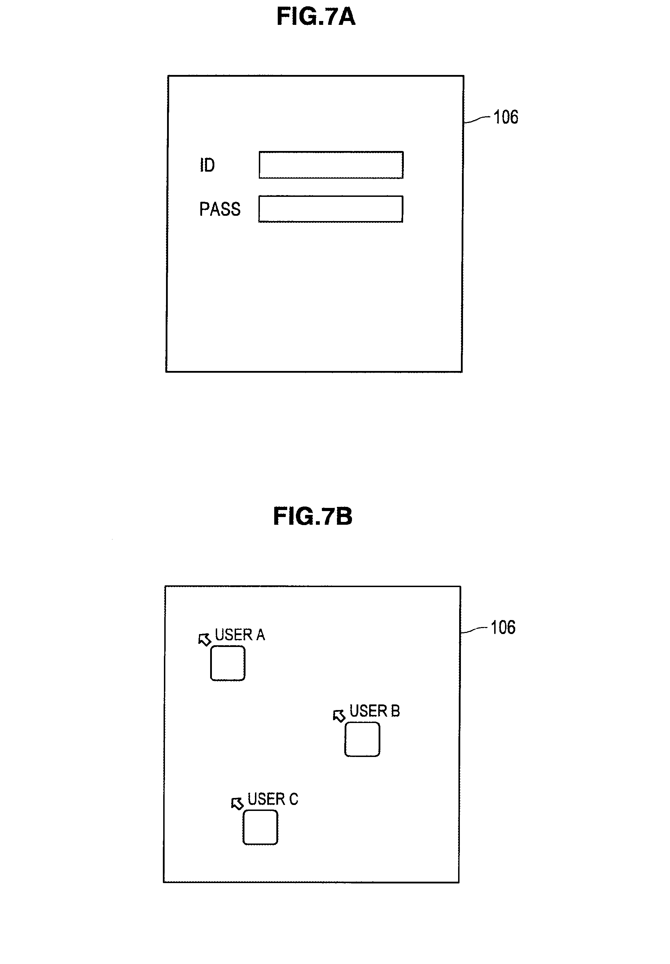

In order to share the content with other users and communicate with other users as described above, a user may log into the system having such a function. The system for communicating with other users may be provided by the application server 11, for example. FIGS. 7A to 7C are explanatory views showing a display example of a screen on the image output unit 106 in the case of logging into the content display system 1 according to the embodiment and sharing the content with other users.

FIG. 7A shows an example of a login screen to the content display system 1 according to the embodiment. The login screen has areas to input a user ID ("ID") and a password ("PASS"), and a user of the information processing device 100 can attempt to log into the content display system 1 by inputting a user ID and a password using the operating unit 103. Note that the information processing device 100 can output the login screen as shown in FIG. 7A to the image output unit 106 by making a connection to the application server 11, for example, through the network 20.

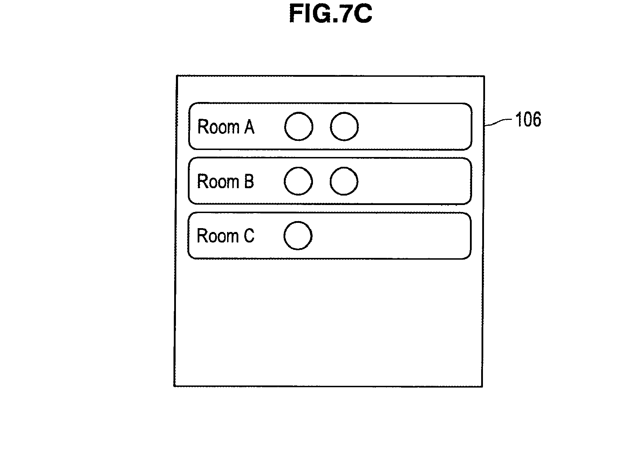

FIG. 7C shows an example of a screen that is displayed in the information processing device 100 after logging into the content display system 1 according to the embodiment. FIG. 7C is an example of a screen that is displayed in the information processing device 100 after successfully logging into the content display system 1, and it is an example of a screen that prompts a user of the information processing device 100 to select which room to enter. FIG. 7C shows the case of prompting a user of the information processing device 100 to select one room from three rooms "Room A", "Room B" and "Room C". A user of the information processing device 100 can select a room to enter by operating the operating unit 103.

FIG. 7B shows an example of a screen that is displayed in the information processing device 100 after logging into the content display system 1 according to the embodiment and selecting a room to enter. FIG. 7B shows the state where the user information corresponding to the information processing device 100 that is present in the room selected by the user, and the screen shown in FIG. 7B is equivalent to the screen shown in FIG. 5. In this manner, by logging into the content display system 1 according to the embodiment and selecting a room to enter, it is possible to share the content with other users and communicate with other users about the content.

As described above, a plurality of users can simultaneously view the same content and thereby make communication with one another about the content. However, if a plurality of pieces of user information are displayed on the screen, there may be cases where the displayed user information interferes with the viewing of the content provided from the content server 10 and thus interferes with communication among users.

In light of the above, when text input or voice input is not made in the information processing device 100, the display control unit 123 may display the user information in a simplified manner so as not to interfere with the viewing of the content provided from the content server 10.

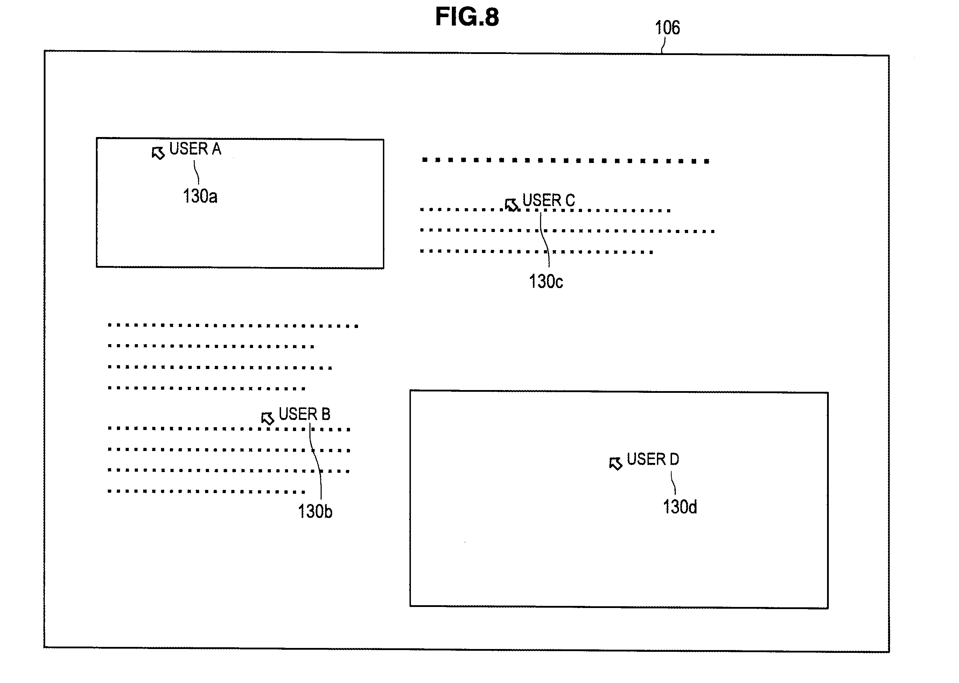

FIG. 8 is an explanatory view showing a display example of user information displayed on the image output unit 106. FIG. 8 shows the state where the information processing device 100 is displaying the same content as the content displayed on the other information processing devices 100 on the image output unit 106. In FIG. 8, compared with FIG. 5, the user information 130a to 130d are displayed in a simplified manner with only the cursor and the user name and without the icon, which has been deleted by the display control unit 123.

By simplifying the display of the user information as described above, it is possible to display the user information in the way that does not interfere with the viewing of the content. Then, when a user of the information processing device 100 starts inputting text or voice, the content server 10 acquires the input and causes the display control units 123 of the information processing devices 100 to switch the user information of the user from the simplified display to the display including the icon.

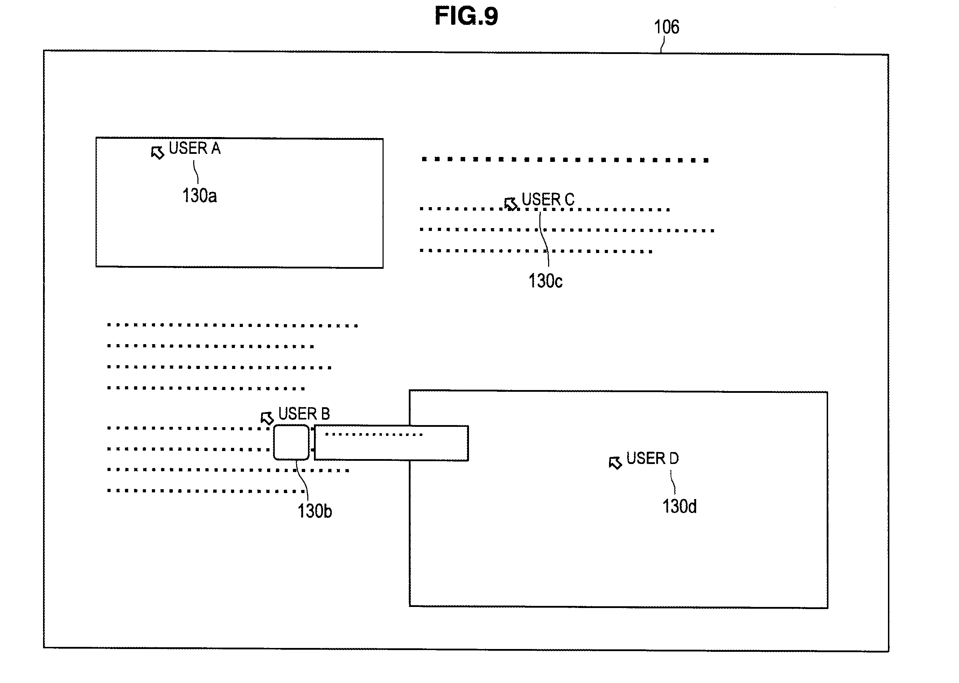

FIG. 9 is an explanatory view showing a display example of user information displayed on the image output unit 106. FIG. 9 shows the state where the information processing device 100 is displaying the same content as the content displayed in the other information processing devices 100 on the image output unit 106. FIG. 9 illustrates the state where the user information of only a user who is entering a comment by inputting text has been switched from the simplified display to the display including the icon.

In the example shown in FIG. 9, the user information 130b corresponding to the information processing device 100B has been switched from the simplified display to the display including the icon and the input text by display control of the display control unit 123. Therefore, users of the information processing devices 100 can keep track of which user is currently entering a comment by inputting text based on a change in the display state of the user information by display control of the display control unit 123.

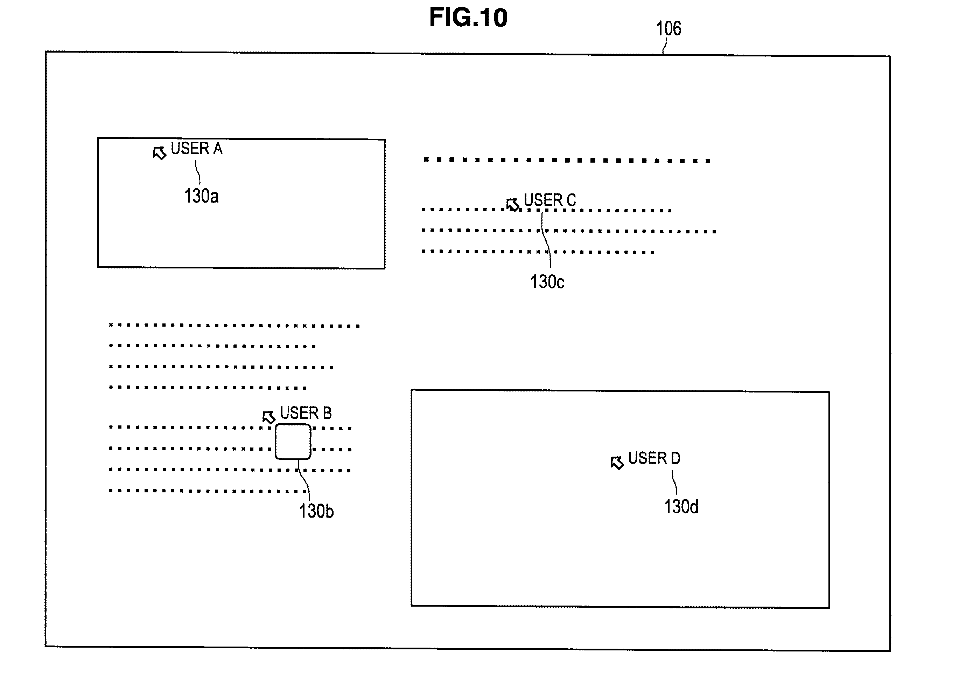

FIG. 10 is an explanatory view showing a display example of user information displayed on the image output unit 106. FIG. 10 shows the state where the information processing device 100 is displaying the same content as the content displayed in the other information processing devices 100 on the image output unit 106. FIG. 10 illustrates the state where the user information of only a user who is entering a comment by inputting voice has been switched from the simplified display to the display including the icon.

In the example shown in FIG. 10, the user information 130b corresponding to the information processing device 100B has been switched from the simplified display where the icon is not displayed to the display including the icon by display control of the display control unit 123. Therefore, users of the information processing devices 100 can keep track of which user is currently entering a comment by inputting voice based on a change in the display state of the user information.

Regarding the user information that is displayed on the image output unit 106 by display control of the display control unit 123, the display position of an icon displayed as the user information or text displayed near the user information may be shifted according to the display position of the user information on the image output unit 106. By shifting the display position of an icon or text according to the display position of the user information on the image output unit 106, the user information can be controlled so as not to extend off screen.

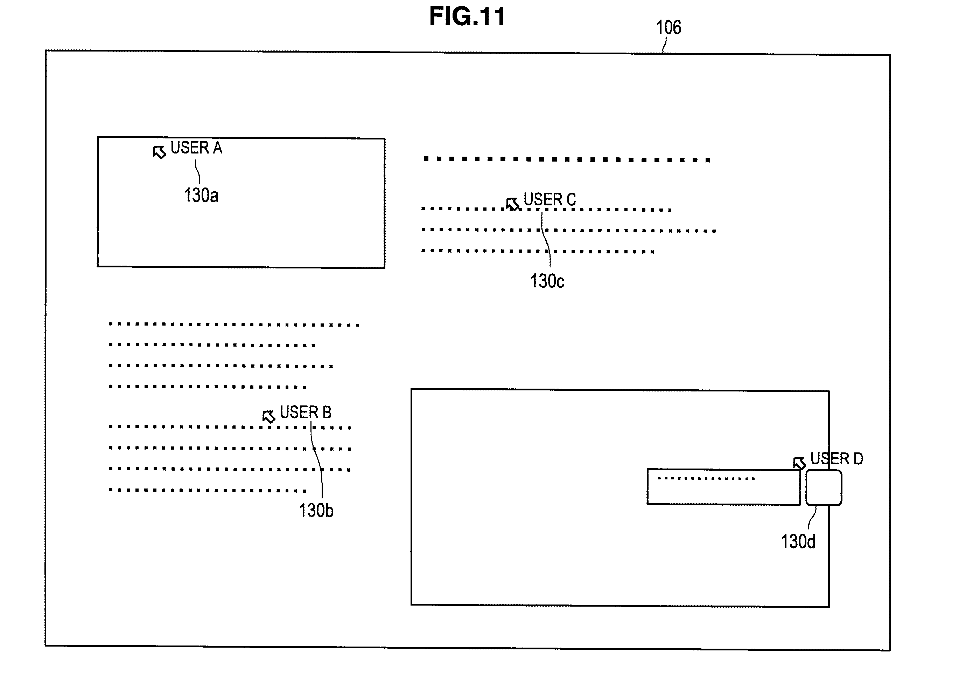

FIG. 11 is an explanatory view showing a display example of user information displayed on the image output unit 106. FIG. 11 shows the state where the information processing device 100 is displaying the same content as the content displayed in the other information processing devices 100 on the image output unit 106. FIG. 11 shows an example of the case where the display position of an icon or text is shifted and displayed according to the display position of the user information on the image output unit 106.

FIG. 11 shows the state where, when the user information 130d is displayed on the far-right portion of the image output unit 106, the text is displayed on the left side of the cursor. In this manner, by varying the display of the user information according to the display position of the user information on the image output unit 106, the user information can be controlled so as not to extend off screen.

When a user inputs text in the state where the user information is displayed as shown in FIG. 11, the text is preferably controlled so as not to extend off screen. Then, in the state where a user is inputting text, information indicating that text is being input may be displayed as the user information of the user.

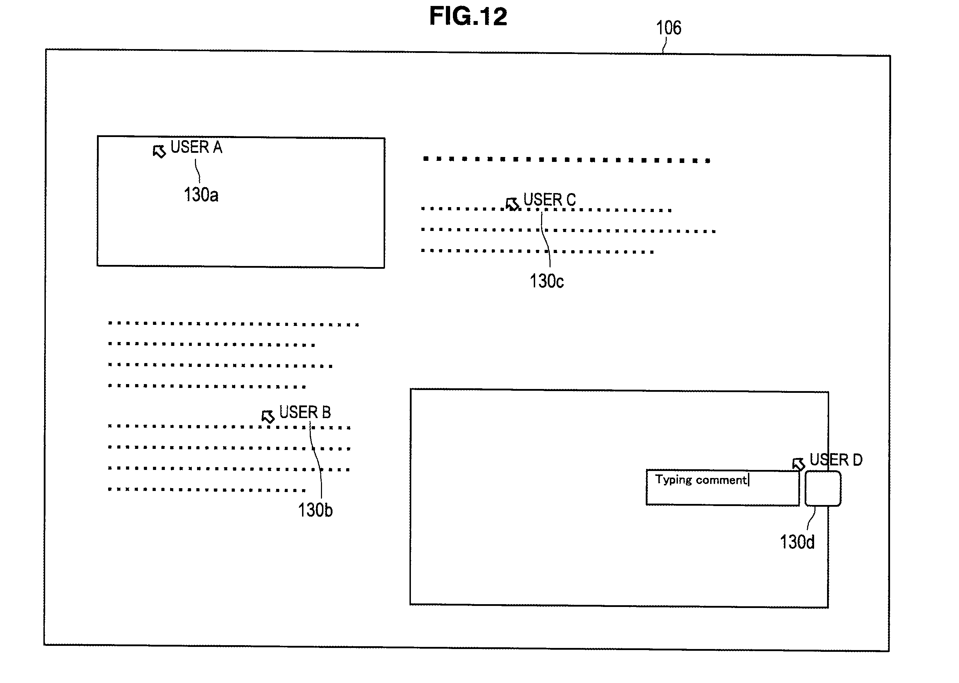

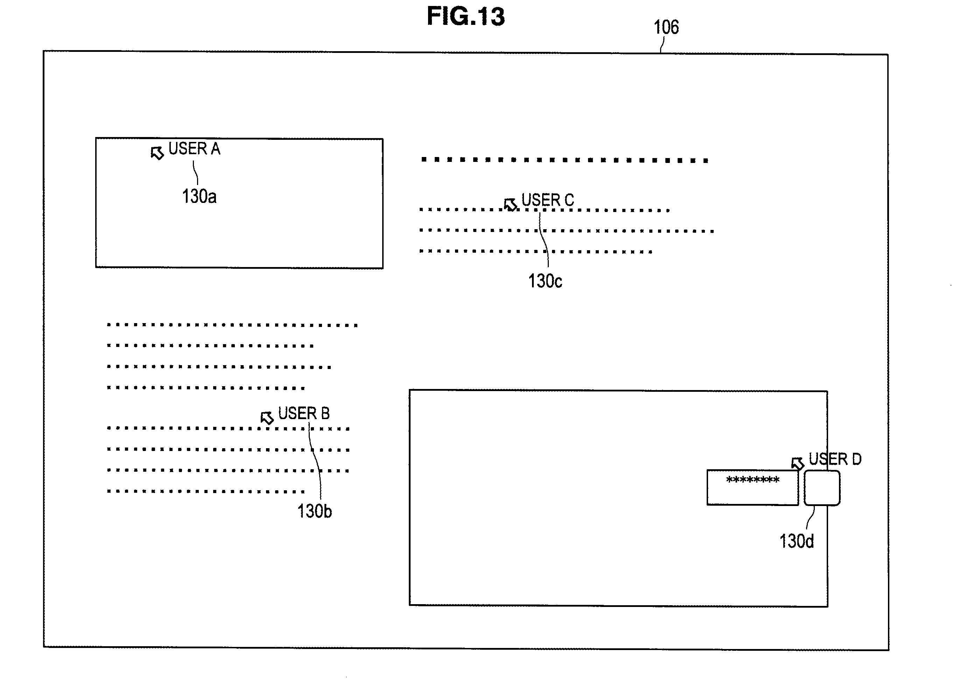

FIGS. 12 and 13 are explanatory views showing a display example when displaying information indicating that text is being input as user information. FIG. 12 illustrates the state where the information indicating that text is being input is displayed by characters as the user information 130d. FIG. 13 illustrates the state where the information indicating that text is being input is displayed by symbols as the user information 130d. In this manner, in the state where a user is inputting text, by displaying information indicating that text is being input as the user information of the user, the other users can find which user is currently inputting text.

Note that, although the information indicating that text is being input is displayed as the user information by characters or symbols in the examples shown in FIGS. 12 and 13, the information indicating that text is being input is not limited to such examples in this disclosure, and the information indicating that text is being input may be displayed by illustrations or icons. Further, in this disclosure, when a user is inputting text, the contents of the text that is input by the user may be displayed as they are on the image output unit 106.

A user of the information processing device 100 according to the embodiment can communicate with other users by inputting voice, not only text, to the information processing device 100. In such a case, the content server 10 may acquire the voice input and the volume level detected by the display control unit 123 of the information processing devices 100, modify the user information 130a to 130d based on the volume level, and cause the display control unit 123 of the information processing devices 100 to display the modified user information 130a to 130d on the image output unit 106.

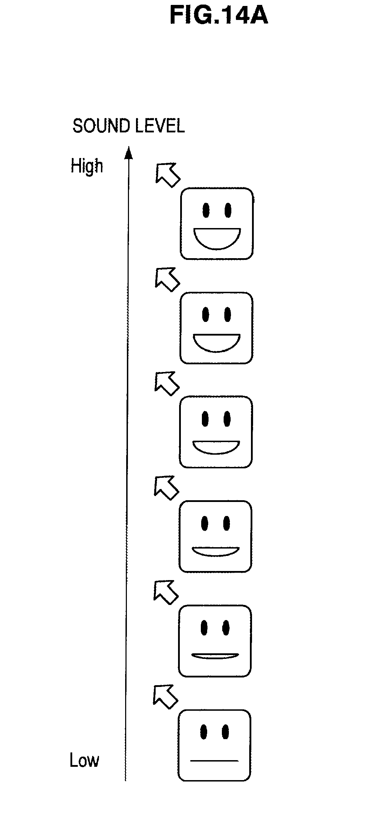

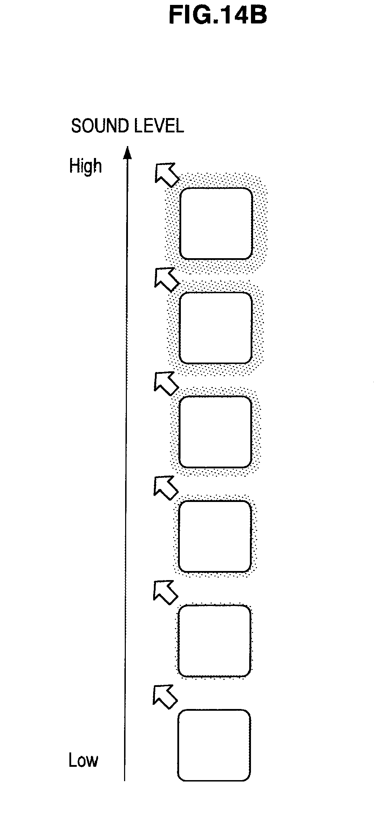

FIGS. 14A and 14B are explanatory views showing a control example of display of user information based on the volume level of voice input by a user. FIG. 14A shows the state where the motion of the mouth of an icon that is displayed as user information is varied based on the volume level of voice that is input by a user. FIG. 14B shows the state where the effect of lighting up the edge of an icon that is displayed as user information is varied based on on the volume level of voice that is input by a user.

In this manner, the display control unit 123 detects the volume level of voice input by a user and modifies the display of user information based on the volume level, thereby allowing the other users who are viewing the same content to recognize which user is entering a comment by inputting voice.

As described above, the user information of a plurality of users are displayed superposed on the same content, thus enabling communication among the users of the information processing devices 100 that are connected to one another through the network.

However, the user does not always perform the operation of the information processing device 100, and the user can be away from the information processing device 100 for a while. If the user information of a user who is not operating the information processing device and currently away from the information processing device 100 remains displayed on the screen, other users vainly try to communicate with the user by entering a comment or the like without knowing that the user is temporarily away from the information processing device 100.

To avoid this, the display control unit 123 may perform display control to move the user information of a user who is not operating the information processing device and currently away from the information processing device 100 to the corner of the screen, for example, thereby notifying other users that the user is in the idle state.

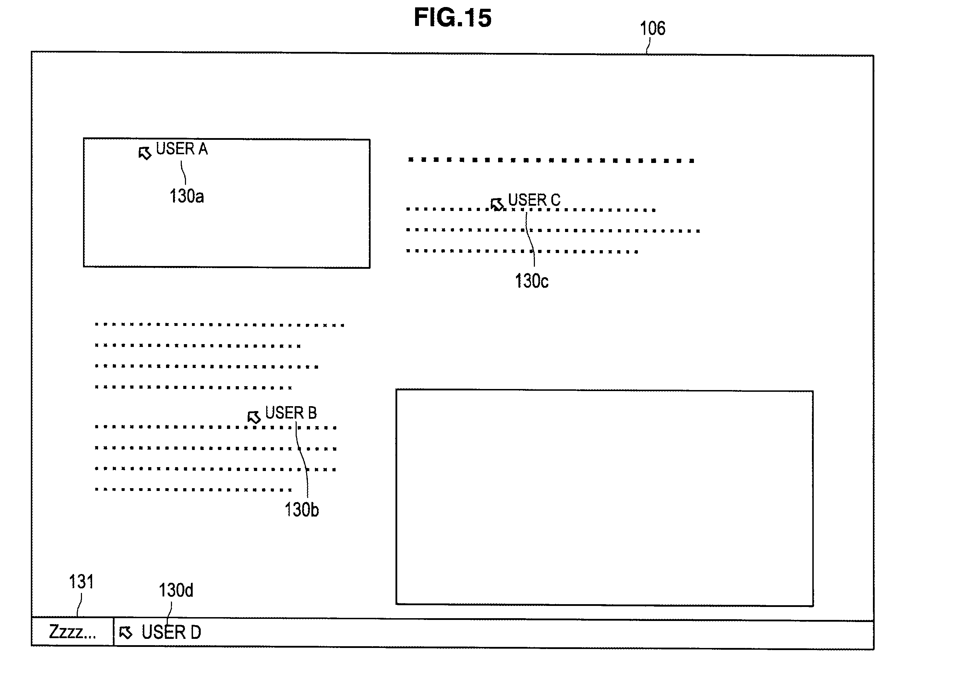

FIG. 15 is an explanatory view showing a state where user information of a user in the idle state is temporarily moved to a lower part of a screen. FIG. 15 shows the state where the user information 130d of the user D is moved to an idle user display area 131 on the lower part of the screen by the display control unit 123.

In this manner, the display control unit 123 performs display control to move the user information of a user who is not operating the information processing device and is temporarily away from the information processing device 100 to the corner of the screen, thereby notifying other users that the user is in the idle state.

After a certain user enters the idle state as shown in FIG. 15, when the user operates the information processing device 100, the idle state is cancelled. On the other hand, after a certain user enters the idle state as shown in FIG. 15, when the user further does not operate the information processing device 100 for a given length of time, control that forces the user to log off the system may be performed.

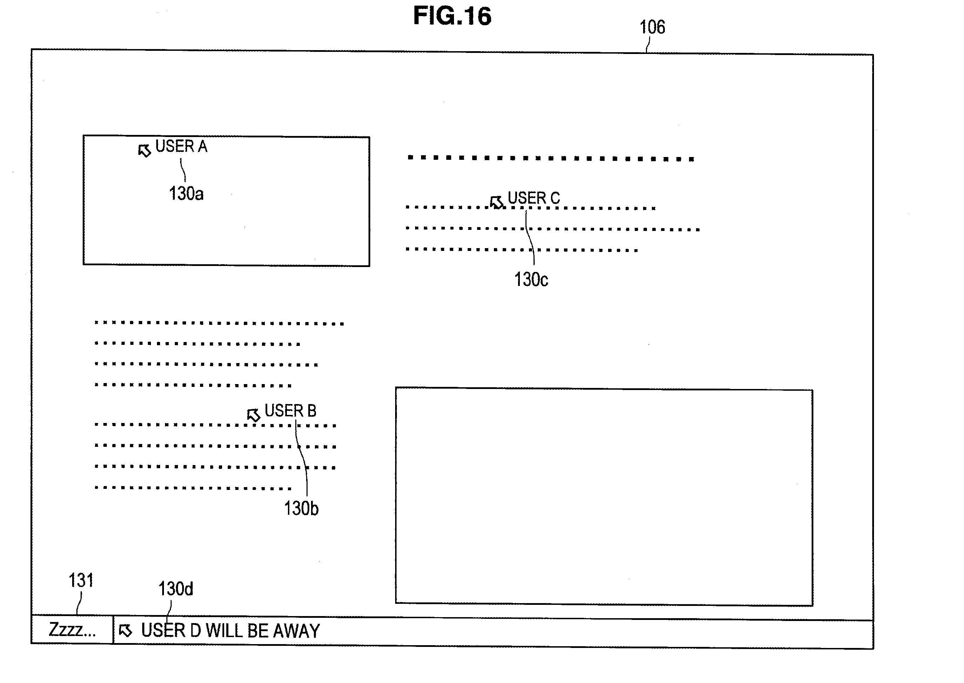

FIG. 16 is an explanatory view showing an example of a screen that is displayed when no operation is performed for a given length of time after the display control unit 123 performs display control to temporarily move user information of a user in the idle state to a lower part of a screen.

FIG. 16 shows an example of a screen that is displayed when, after the display control unit 123 performs display control to move the user information 130d of the user D to the idle user display area 131 on the lower part of the screen as shown in FIG. 15, the user D further does not operate the information processing device 100 for a given length of time. The display control unit 123 performs control to display the screen as shown in FIG. 16, thereby notifying other users that the user D will enter the away state and log off the system.

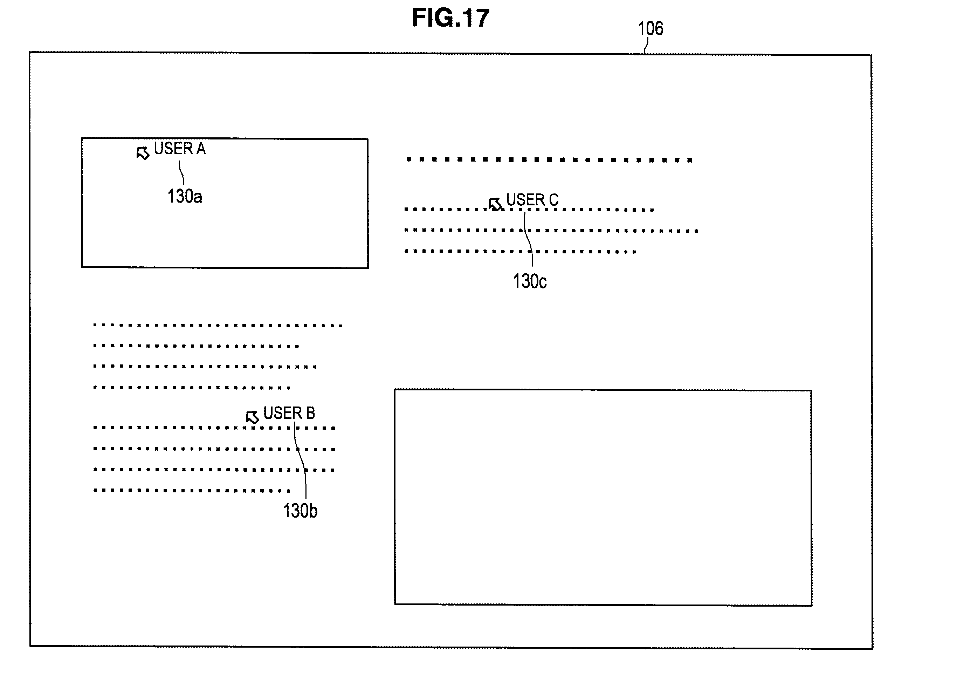

FIG. 17 is an explanatory view showing an example of a screen displayed on the image output unit 106. FIG. 17 is an explanatory view showing an example of a screen that is displayed when the user D does not operate the information processing device 100 for a given length of time after the display as shown in FIG. 16. FIG. 17 illustrates the state where the user D is forced to log off the system because of not operating the information processing device 100 for a given length of time, and the user information of the user D is removed from the screen.

In this manner, when a user does not operate the information processing device 100 for a given length of time, the user is forced to leave the system and the user information of the user is removed from the screen, so that the other users who are viewing the same content can find that the user has left the system and is no longer viewing the content.

Note that the cases where each user shifts to the idle state may include a case where focus is not on an application such as a browser for displaying a content, a case where a mouse cursor is not on a window that displays an application such as a browser for displaying a content and so on, for example, in addition to the case where a user does not operate the information processing device 100 for a given length oftime as described above.

Some of the content that is displayed on the image output unit 106 do not fit within one screen, and the whole content can only be seen by scrolling up and down or side to side. In this case, when a certain user scrolls the screen in order to view the content, the screen may be scrolled for the other users also, so that the same area of the content can be brought into view for all users.

However, when the screen is scrolled forcibly, a case may occur where the content which is viewed by a certain user is scrolled off-screen and not visible. Therefore, in consideration of such a case, the scrolling of the screen may not be synchronized across all users.

When the scrolling of the screen is asynchronous across all users, when a certain user (e.g. the user A) scrolls the screen, the user information of another user (e.g. the user B) is scrolled off the display range of the image output unit 106. Thus, a case may occur where, even when the user B which is off the display range of the image output unit 106 inputs text, the text input by the user B is not visible for the user A.

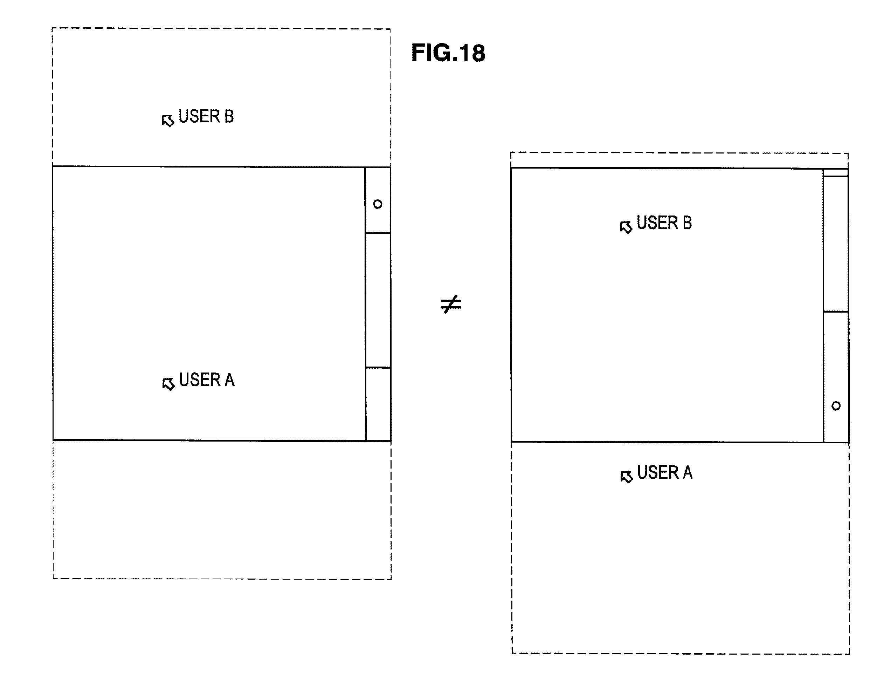

FIG. 18 is an explanatory view showing an example of a screen displayed on the image output unit 106. FIG. 18 is an explanatory view showing an example of the state where, when the scrolling of a screen is asynchronous across all users, user information is scrolled off the display range of the image output unit 106. FIG. 18 illustrates the image output units 106 of the information processing devices 100 that are used by the user A and the user B as an example. In FIG. 18, the range indicated by the solid line represents the display range of the image output unit 106, and the range indicated by the dotted line represents the range of the content as a whole.

In the example of FIG. 18, while the user information of the user A is displayed on the image output unit 106 of the information processing device 100 which is used by the user A, the user information of the user B is not displayed on the image output unit 106. Likewise, in FIG. 18, while the user information of the user B is displayed on the image output unit 106 of the information processing device 100 which is used by the user B, the user information of the user A is not displayed on the image output unit 106.

When there is user information that is not displayed on the image output unit 106, the display control unit 123 may perform control to display an icon indicating the existence of user information that is not displayed on the image output unit 106 on the scroll bar, for example. FIG. 18 illustrates the state where, on the image output unit 106 of the information processing device 100 which is used by the user A, the icon indicating the existence of the user information of the user B that is not displayed on the image output unit 106 is displayed on the scroll bar by the display control unit 123. Likewise, FIG. 18 illustrates the state where, on the image output unit 106 of the information processing device 100 which is used by the user B, the icon indicating the existence of the user information of the user A that is not displayed on the image output unit 106 is displayed on the scroll bar by the display control unit 123.

In this manner, the display control unit 123 performs control to display the icon indicating the existence of user information that is not displayed on the image output unit 106 on the scroll bar, for example, so that the users can be aware that there is user information that is not displayed on the image output unit 106.

Then, when a user of the information processing device 100 places the cursor on the icon displayed on the scroll bar as shown in FIG. 18 and operates the operating unit 103, the display control unit 123 may change the display area of the content so that user information of another user is displayed on the image output unit 106.

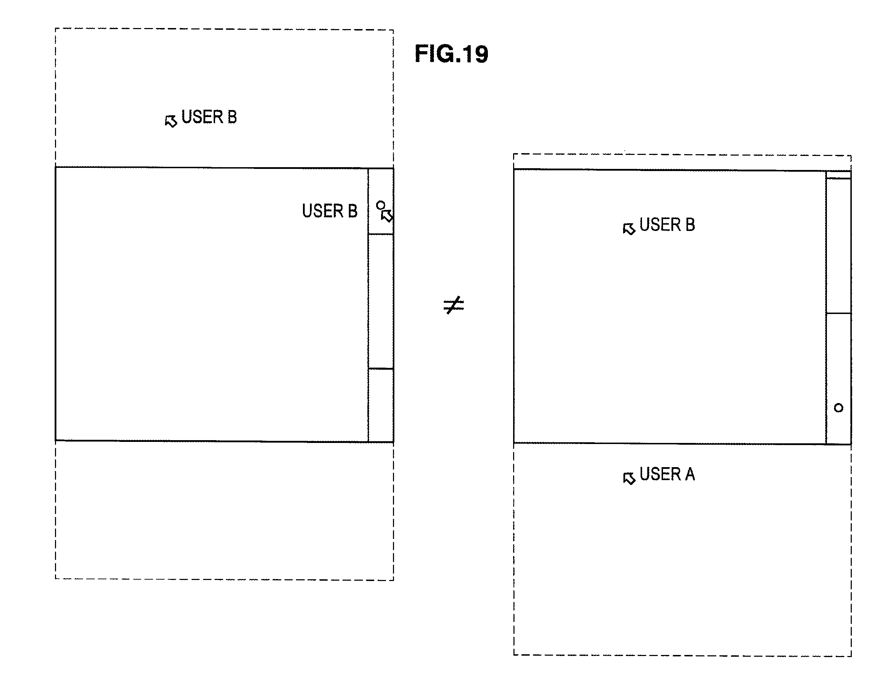

FIG. 19 is an explanatory view showing an example of a screen displayed on the image output unit 106. FIG. 19 illustrates an example of the case where a user of the information processing device 100 places the cursor on the icon displayed on the scroll bar as shown in FIG. 18 and operates the operating unit 103. When the user places the cursor on the icon displayed on the scroll bar and operates the operating unit 103, the display control unit 123 changes the display area of the content so that user information of another user is displayed on the image output unit 106.

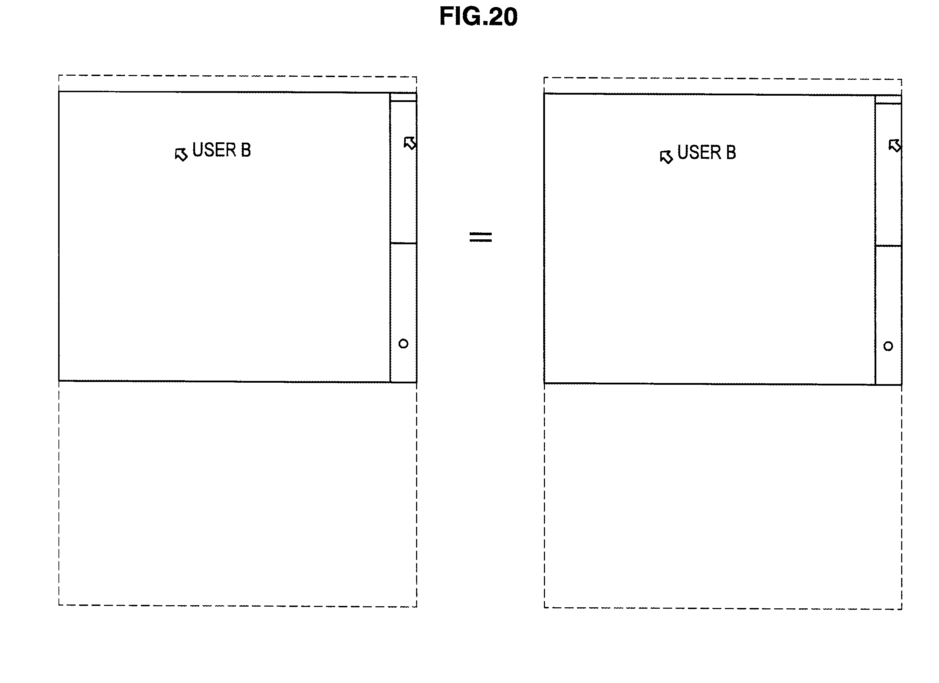

FIG. 20 is an explanatory view showing an example of a screen displayed on the image output unit 106. FIG. 20 illustrates an example of the case where, in the state where the content is displayed on the image output unit 106 as shown in FIG. 19, the user A places the cursor on the icon displayed on the scroll bar and operates the operating unit 103.

As a result that the user A places the cursor on the icon displayed on the scroll bar and operates the operating unit 103, the display area of the image output unit 106 of the user A and the display area of the image output unit 106 of the user B coincide as shown in FIG. 20. Then, as a result that the display area of the image output unit 106 of the user A and the display area of the image output unit 106 of the user B coincide, the user information of the user A and the user B is displayed on the image output unit 106.

In this manner, the display control unit 123 changes the display area of the content according to user operation, thereby enabling the display area of the content to be synchronous across a plurality of users, so that the user information that has not been displayed on the image output unit 106 can be displayed on the image output unit 106.

When two or more users modify a certain content portion in the case where a plurality of users are simultaneously viewing the same content, processing that is different from processing when one user modifies the content portion may be performed.

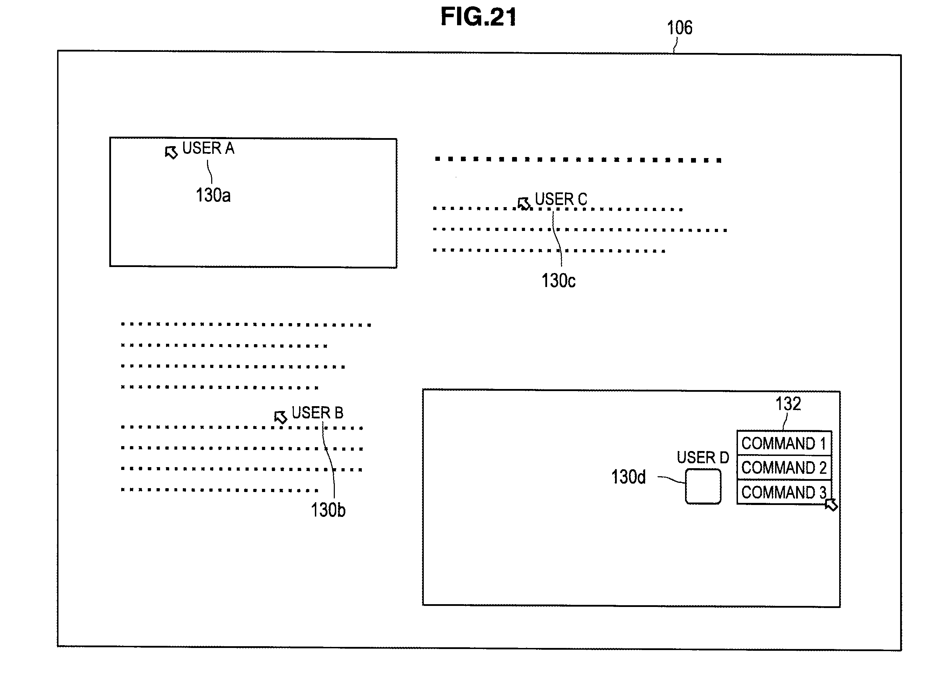

FIG. 21 is an explanatory view showing an example of a screen displayed on the image output unit 106. FIG. 21 illustrates an example of a screen when the content server acquires modification information from a certain user (the user D in this example) operating the operating unit 103, modifies the content based on the modification, and causes the display control unit 123 of the information processing devices 100 to display the modified content on the image output unit 106.

In the example shown in FIG. 21, by the operation of the user D on the operating unit 103 (by clicking a button on a mouse, for example), a context menu is displayed on the screen. FIG. 21 illustrates the state where the context menu composed of three commands "Command A", "Command B" and "Command C" is displayed by the display control unit 123 in response to the operation of the user D.

Note that, when a context menu is displayed by the operation of one user as shown in FIG. 21, the context menu may refrain from accepting the operation of another user. Thus, when a context menu is displayed by the operation of one user, the context menu may not be displayed in the information processing device 100 which is operated by another user, or if displayed, the operation of a user may be nullified.

On the other hand, when two or more users modify the same portion of the content, the context menu that is displayed on the screen by the display control unit 123 may be different from the one shown in FIG. 21.

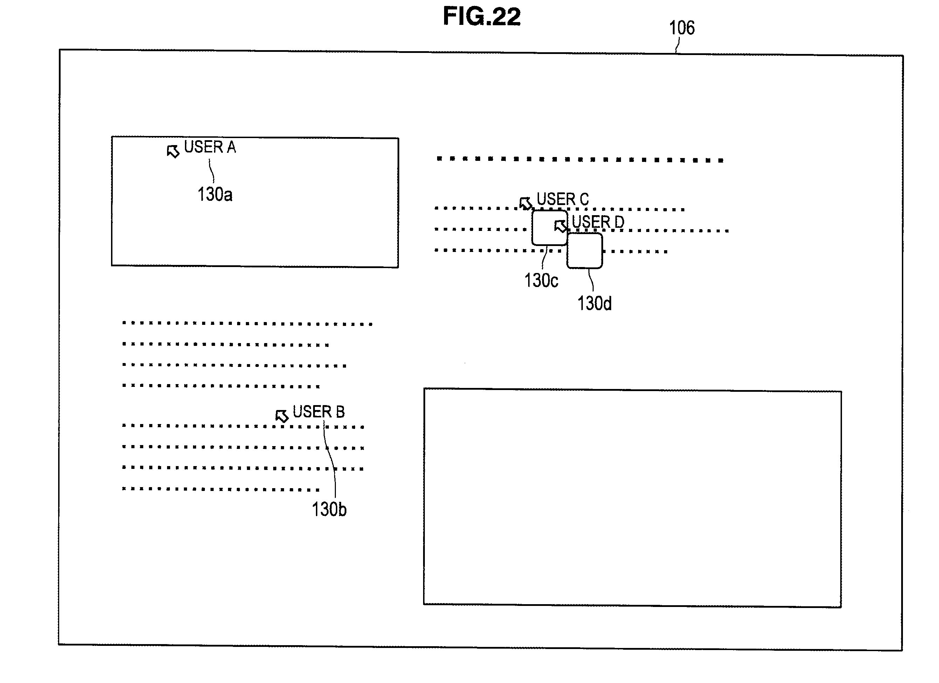

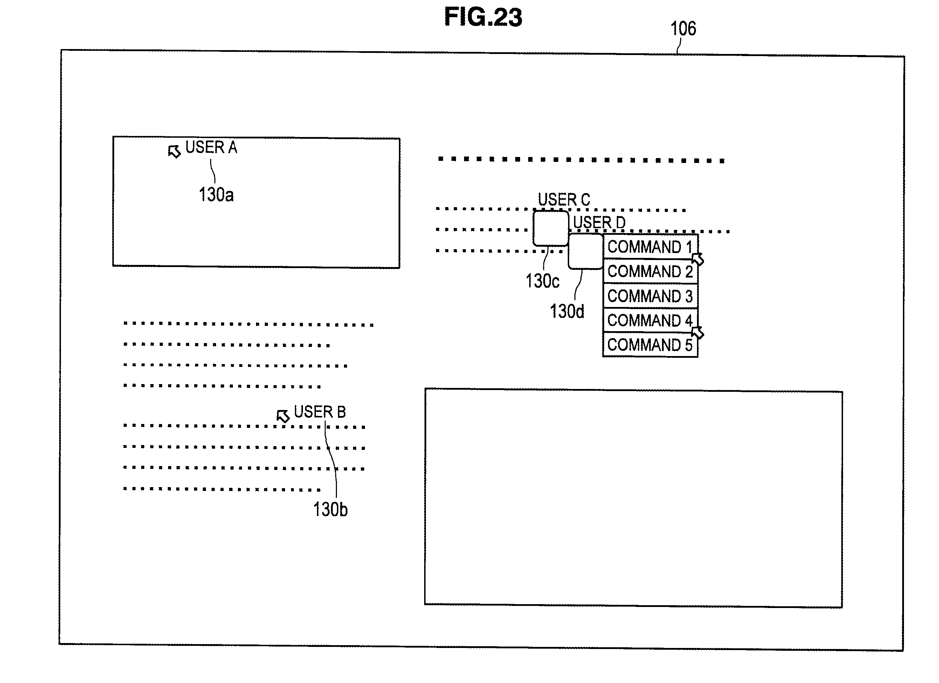

FIGS. 22 and 23 are explanatory views showing an example of a screen displayed on the image output unit 106. FIG. 22 shows the state where the user D moves the user information 130d of the user D to the position of the user information 130c of the user C in order to perform modifications on the same portion of the content together with the user C.

FIG. 23 shows an example of a screen that is displayed on the image output unit 106 by the display control unit 123 when the user C and the user D modify the same portion of the content. In the example of FIG. 23, by the operation of the user C and the user D, the context menu composed of five commands "Command A", "Command B", "Command C", "Command D" and "Command E" is displayed on the image output unit 106 by the display control unit 123.

As described above, when two or more users modify a certain portion of the content in the case where a plurality of users are simultaneously viewing the same content, processing that is different from processing when one user modifies the content portion is performed. This offers a wider variety of operations for the content.

Note that, when a context menu is displayed by the operation of a plurality of users as shown in FIG. 23, the context menu may refrain from accepting the operation of a user different from the users. Thus, when a context menu is displayed by the operation of a plurality of users, the context menu may not be displayed in the information processing device 100 which is operated by a user different from the users, or if displayed, the operation of a user different from the users may be nullified.

Further, in this embodiment, when user information of two or more users gets close to each other in the case where a plurality of users are simultaneously viewing the same content, transmission and reception of a direct message between the users or entrance to another room by the users, for example, may be allowed, in addition to the display of the context menu as described above.

Further, in this disclosure, when user information of two or more users gets close to each other in the case where a plurality of users are simultaneously viewing the same content, the master-slave relationship among the plurality of users may be set. Specifically, the device may be designed so that only a specific user is allowed to perform modifications on the content displayed on the screen, and the other users are allowed only to view the modifications on the content by the specific user and not allowed to perform modifications on the content. In this case, the content detection unit 121 may detect the details of the content, and the user state detection unit 122 may detect the state of each user, and thereby the display control unit 123 may control modifications on the content according to the content and the user.

The image output unit 106 of the information processing device 100 which is used by each user does not necessarily have the same resolution. There may be cases where one information processing device 100 can display the entire content on the image output unit 106, whereas another information processing device 100 can display only a part of the content.

In such a case, the display control unit 123 may control the display area of the content so as to display user information of another user.

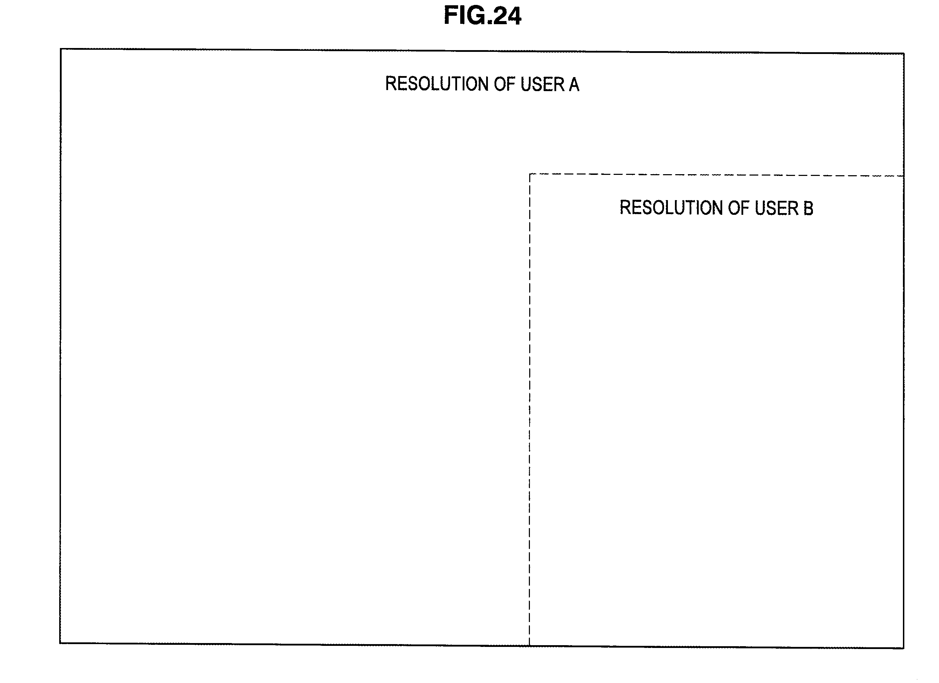

FIG. 24 is an explanatory view showing the way the display control unit 123 controls the display area of the content so that user information of another user is displayed. FIG. 24 shows the case where the screen resolution of the information processing device 100 which is used by the user A and the screen resolution of the information processing device 100 which is used by the user B are different, and the information processing device 100 which is used by the user B can display the content only in the narrower range.

FIG. 24 illustrates the state where the user information of the user A is displayed on the image output unit 106 of the information processing device 100 which is used by the user B.

In such a case, when the user A operates the operating unit 103 to move the user information of the user A, the display control unit 123 of the information processing device 100 which is used by the user B may change the display range of the content according to the movement of the user information of the user A.

In this manner, according to the movement of user information of another user, the display control unit 123 controls the display area of the content to display the user information on the image output unit 106, so that the information processing device 100 according to the embodiment allows a user to view the same range of the content as that of another user.

### [1-4. Exemplary Hardware Configuration of Information Processing Device]

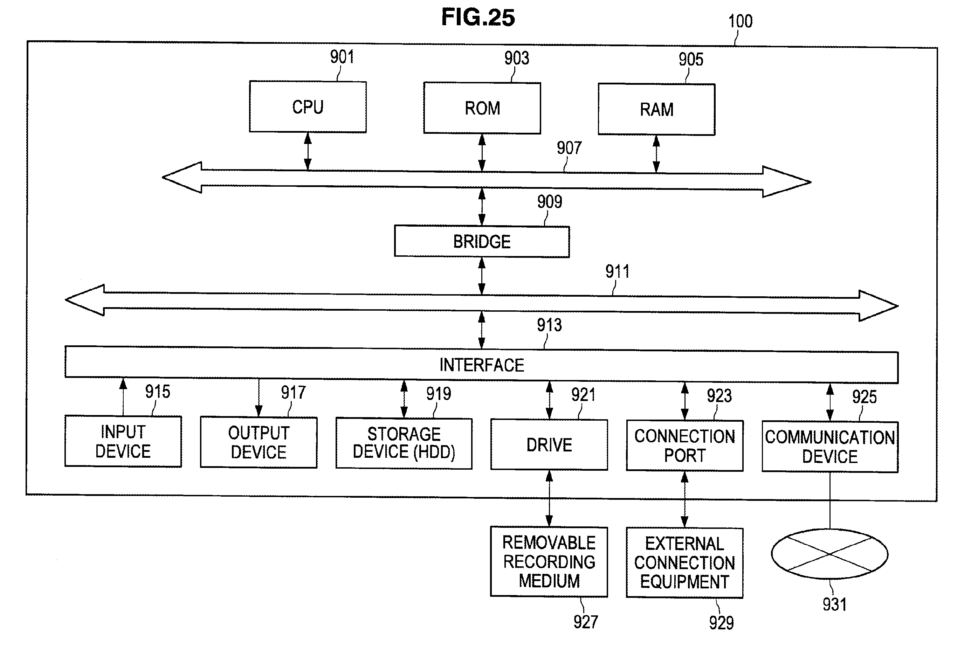

An example of a hardware configuration of the information processing device 100 according to one embodiment of the disclosure described above is described hereinafter. FIG. 25 is an explanatory view showing an exemplary hardware configuration of the information processing device 100 according to one embodiment of the disclosure.

Referring to FIG. 25, the information processing device 100 according to one embodiment of the disclosure mainly includes a CPU 901, a ROM 903, a RAM 905, a host bus 907, a bridge 909, an external bus 911, an interface 913, an input device 915, an output device 917, a storage device 919, a drive 921, a connection port 923, and a communication device 925.

The CPU 901 serves as a processing unit and a control unit, and it controls the whole or a part of the operation in the information processing device 100 according to programs stored in the ROM 903, the RAM 905, the storage device 919 or a removable recording medium 927. The ROM 903 stores a program to be used by the CPU 901, a processing parameter and so on. The RAM 905 primarily stores a program to be used in the execution on the CPU 901, a parameter that varies during the execution and so on. The CPU 901, the ROM 903 and the RAM 905 are connected with one another through the host bus 907, which is an internal bus such as a CPU bus.

The host bus 907 is connected to the external bus 911 such as a Peripheral Component Interconnect/Interface (PCI) bus via the bridge 909.

The input device 915 is an operating means to be operated by a user, such as a mouse, a keyboard, a touch panel, a button, a switch or a lever, for example. The input device 915 may be a remote controlling means (or a remote control) using an infrared ray or another radio wave, or an external connected equipment 929 compatible with the operation of the information processing device 100, such as a mobile phone or a PDA. Further, the input device 915 may be an input control circuit that generates an input signal based on information input by a user using the above operating means and outputs it to the CPU 901, for example. A user of the information processing device 100 operates the input device 915 to thereby input various kinds of data or direct processing operation to the information processing device 100.

The output device 917 may be a device for visually or auditorily presenting a user with acquired information, such as a display device like a CRT display device, a liquid crystal display device, a plasma display device, an EL display device or a lamp, an audio output device like a speaker or a headphone, a printer, a mobile phone or a facsimile machine, for example. The output device 917 outputs results of performing various kinds of processing by the information processing device 100, for example. Specifically, the display device displays results of performing various kinds of processing by the information processing device 100 with text or images. The audio output device converts an audio signal containing reproduced audio data, acoustic data or the like into an analog signal and outputs the signal.

The storage device 919 may be a magnetic storage device such as a hard disk drive (HDD), a semiconductor storage device, an optical storage device, or a magneto-optical storage device, for example. The storage device 919 stores programs to be executed by the CPU 901, various kinds of data, acoustic signal data or image signal data acquired from the outside and so on

The drive 921 is a reader/writer for a recording medium, which is built in the information processing device 100 or attached externally. The drive 921 reads information that is recorded in the removable recording medium 927 such as a magnetic disk, an optical disk, a magneto-optical disk or a semiconductor memory which is attached thereto and outputs the information to the RAM 905. Further, the drive 921 can write information into the removable recording medium 927 such as a magnetic disk, an optical disk, a magneto-optical disk or a semiconductor memory which is attached thereto. The removable recording medium 927 may be a DVD medium, a Blu-ray medium, a compact flash (CF) (registered trademark), a memory stick, a secure digital (SD) memory card or the like. Further, the removable recording medium 927 may be an integrated circuit (IC) card or an electronic device incorporating a contactless IC chip, for example.

The connection port 923 is a port for directly connecting equipment to the information processing device 100, such as a universal serial bus (USB) port, an IEEE 1394 port such as i.Link, a small computer system interface (SCSI) port, an RS-232C port, an optical audio terminal, or a high-definition multimedia interface (HDMI) port. By connecting the external connected equipment 929 to the connection port 923, the information processing device 100 can directly acquire acoustic signal data or image signal data from the external connected equipment 929 or supply acquired signal data or image signal data to the external connected equipment 929.

The communication device 925 is a communication interface which is a communication device or the like for establishing a connection with a communication network 931, for example. The communication device 925 may be a communication card for wired or wireless local area network (LAN), Bluetooth or wireless USB (WUSB), a router for optical communication, a router for asymmetric digital subscriber line (ADSL) or a modem for various kinds of communications, for example. The communication device 925 can transmit and receive signals or the like to and from the Internet or another communication device in conformity to a prescribed protocol such as TCP/IP, for example. Further, the communication network 931 that is connected to the communication device 925 may be a network or the like connected by wired or wireless means, and it may be the Internet, home LAN, infrared data communication, radio wave communication, satellite communication or the like, for example.

One example of the hardware configuration of the information processing device 100 according to one embodiment of the disclosure is described in the foregoing. In the information processing device 100 having the above configuration, the CPU 901 reads computer programs stored in the storage device 919 or the like and sequentially executes the programs, for example, thereby implementing the operation of the information processing device 100 according to one embodiment of the disclosure described above.

### <2. Summary>

As described above, the information processing device 100 according to one embodiment of the disclosure enables viewing of the same content having a plurality of portions that is provided from the content server 10 together with the information processing device 100 to which it is connected through the network 20.

The information processing device 100 according to one embodiment of the disclosure displays user information composed of a cursor operated by a user of each information processing device 100 and a user name and an icon of each user displayed near the cursor on a screen within a portion of the content. The information processing device 100 according to one embodiment of the disclosure thereby allows the users to grasp which content portion each user is interested in.

When the information processing device 100 according to one embodiment of the disclosure displays the same content as the information processing device 100 to which it is connected through the network 20, the information processing device 100 accepts text input or voice input and outputs the input text or voice to the information processing devices 100, thereby enabling communication with another user.

Further, the information processing device 100 according to one embodiment of the disclosure brings a plurality of user information closer to each other, thereby enabling execution of processing effective only for those users.

Although preferred embodiments of the disclosure are described in detail above with reference to the appended drawings, the disclosure is not limited thereto. It should be understood by those skilled in the art that various modifications, combinations, sub-combinations and alterations may occur depending on design requirements and other factors insofar as they are within the scope of the appended claims or the equivalents thereof.

For example, the above description illustrates the case where, when a user of the information processing device 100 does not perform operations on the information processing device 100, the display is controlled to shift the state of the user to the idle state or the away state; however, the disclosure is not limited to such an example. For example, when a user of the information processing device 100 does not perform operations on the information processing device 100 for reasons such as walking, being on the train or driving a car, for example, the display control unit 123 may perform control to output the state of the user to the image output unit 106. To implement this, the information processing device 100 may include an acceleration sensor, a GPS receiver or the like.

Further, the above description illustrates the case where a plurality of information processing devices 100 share the content that is provided from the content server 10 and display the same content at the same time; however, the disclosure is not limited to such an example. For example, the disclosure may be applied in the same manner to the case where another information processing device 100 (e.g. the information processing device 100B) accesses the content (a document file, a presentation file etc.) that is stored in a certain information processing device 100 (e.g. the information processing device 100A), for example.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The present disclosure contains subject matter related to that disclosed in Japanese Priority Patent Application JP 2010-179697 filed in the Japan Patent Office on August 10, 2010, the entire content of which is hereby incorporated by reference.

The following numbered clauses describe matter that may be combined as indicated with the claims:
Clause 1. The method of claim 10, wherein the representation of the first user device is sent from the first user device to the server.
Clause 2. The method of claim 10, wherein the representations of the first and second user devices respectively comprise first and second user icons.
Clause 3. The method of clause 2, wherein the first and second user icons respectively comprise images of first and second users.
Clause 4. The method of clause 2, wherein the representation of the first user device further comprises at least one of a first cursor or a first user name, and the representation of the second user device further comprises at least one of a second cursor or a second user name.
Clause 5. The method of clause 4, wherein the representation of the first user device includes the first user icon only when at least one of text or voice input is sent from the first user device to the server.

## Claims

1. A method for initiating display of information relating to content having a plurality of portions, comprising:
acquiring a capability of a first user device in a first location and a capability of a second user device in a second location;
respectively acquiring, from the first and second user devices, information identifying first and second ones of the content portions; and
generating signals for respectively displaying representations of the first and second user devices as indications of the first and second content portions.

2. The method of claim 1, wherein the representations of the first and second user devices are respectively acquired from the first and second user devices;

3. The method of claim 1, wherein the representations of the first and second user devices respectively comprise first and second user icons.

4. The method of claim 3, wherein the first and second user icons respectively comprise images of first and second users.

5. The method of claim 3, wherein the representation of the first user device further comprises at least one of a first cursor or a first user name, and the representation of the second user device further comprises at least one of a second cursor or a second user name.

6. The method of claim 1, further comprising:
acquiring first text from the first user device and second text from the second user device; and
generating signals for respectively displaying the first and second texts within the first and second content portions.

7. The method of claim 1, further comprising:
acquiring first voice input having a first volume value from the first user device and second voice input having a second volume value from the second user device;
respectively modifying the representations of the first and second user devices based on the first and second volume values; and
generating signals for displaying the modified representations of the first and second user devices.

8. The method of claim 5, wherein the representation of the first user device includes the first user icon only when at least one of text or voice input is acquired from the first user device, and the representation of the second user device includes the second user icon only when at least one of text or voice input is acquired from the second user device.

9. The method of claim 1, further comprising:
acquiring modification information from at least one of the first user device or the second user device;
modifying the content based on the at least one modification; and
generating signals for displaying the modified content.

10. A method for displaying information relating to content having a plurality of portions, comprising:
sending to a server, from a first user device in a first location, information identifying a first portion of the content, the first user device having a first capability;
receiving, from the server, signals for displaying:
a representation of the first user device as an indication of the first content portion; and
a representation of a second user device in a second location as an indication of a second content portion associated with the second user device, the second user device having a second capability; and
displaying the representations of the first and second user devices.

11. The method of claim 10, further comprising:
sending first text from the first user device to the server;
receiving, from the server, signals for displaying:
the first text within the first content portion; and
second text associated with the second user device in the second content portion; and
displaying the first and second texts.

12. The method of claim 10, further comprising:
sending first voice input having a first volume value from the first user device to the server;
receiving, from the server, signals for displaying:
a modified representation of the first user device, the modified representation of the first user device comprising the representation of the first user device modified by the server based on the first volume value; and
a modified representation of the second user device, the modified representation of the second user device comprising the representation of the second user device based on a second volume value associated with the second user device; and
displaying the modified representations of the first and second user devices.

13. The method of claim 10, further comprising:
sending modification information from the first user device to the server;
receiving, from the server, signals for displaying modified content, the modified content comprising the content modified by the server based on the modification; and
displaying the modified content.

14. An apparatus for displaying information relating to content having a plurality of portions, comprising:
a memory; and
a processor executing instructions stored in the memory to:
send to a server, from a first user device in a first location, information identifying a first portion of the content, the first user device having a first capability;
receive, from the server, signals for displaying:
a representation of the first user device as an indication of the first content portion; and
a representation of a second user device in a second location as an indication of a second content portion associated with the second user device, the second user device having a second capability; and
display the representations of the first and second user devices.

15. The apparatus of claim 14, wherein the first capability comprises an audio output function.
